Europäisches Patentamt

(19) European Patent Office

Office européen des brevets

(11) Publication number : **0 477 155 A2**

# EUROPEAN PATENT APPLICATION

(21) Application number : **91850212.1**

(22) Date of filing : **04.09.91**

(51) Int. Cl.⁵ : **G01S 13/42, G01S 13/24**

(30) Priority : **18.09.90 SE 9002967**

(43) Date of publication of application :
**25.03.92 Bulletin 92/13**

(84) Designated Contracting States :
**AT BE CH DE DK ES FR GB GR IT LI LU NL SE**

(71) Applicant : **Bofors Electronics AB**
**S-175 88 Järfälla (SE)**

(72) Inventor : **Olsson, Kjell**
**Saningsvägen 17**
**S-175 45 Järfälla (SE)**
Inventor : **Pettersson, Per-Ake**
**Knipvägen 59**
**S-184 62 Akersberga (SE)**

(74) Representative : **Olsson, Gunnar**
**Nobel Corporate Services Patents and**
**Trademarks**
**S-691 84 Karlskoga (SE)**

(54) **Radar means.**

(57)    The disclosure relates to an apparatus for angular resolution and measurement of radar targets for a radar of the type which transmits a signal repeatedly on at least two frequencies, while the antenna scans the pertinent radar targets, preferably a radar which transmits continually alternatingly between a plurality of frequencies which are repeated while the antenna scans the pertinent radar targets. The measurement of radar targets is based on adapted radar wave shape and the lobe shape of the antenna. The measurement values which are obtained when the radar antenna scans a radar target are processed in a signal processing unit in which the measurement values and their variation during the antenna scan are compared or correlated with a known measured and/or calculated target function.

EP 0 477 155 A2

## TECHNICAL FIELD

The present invention relates to an apparatus for angular resolution and measurement of radar targets in a radar of the type which transmits a signal repeatingly on at least two frequencies while the antenna scans the pertinent radar targets, preferably a radar which transmits continually alternatingly between a plurality of frequencies which are repeated while the antenna scans the pertinent radar targets.

## BACKGROUND ART

Radar apparatus for military purposes demand high precision on measuring the angular position of a radar target. Examples of such radar apparatuses are primarily radars for fire control. These radars may be of the tracking type in which the radar, after homing, catches and tracks a target, or combined track while scan radars, in which the radar scans over an angle sector (often a complete revolution) at the same time as the signal processing equipment of the radar detects, stores and keeps track of targets and their positions, and updates these values on each antenna scanning of the targets.

Other types of radar apparatus also demand high precision on measuring targets such as, for example, missile trackers and scanning/homing radars. These latter are employed, for instance, to home in the above-mentioned tracking radars onto targets which they have found while scanning large areas. Consequently, they need not display the same high degree of precision as the latter type of radar, but demands on precision are nevertheless increasing. Ideally, precision should be such that the tracking radar need not seek for the target but can capture it directly. There are also desires in this art that precision be so good as to enable, for example, direct firing at missiles on the basis of information from the homing radar. Aircraft and missiles move so quickly that there is very little time first to home in a tracking radar which is then to find the target and establish tracking before fire control data can be provided to missiles, guns etc.

There is therefore a desire in this art to improve the performance of military radar apparatus in respect of resolution and measuring of a target in the angular direction.

It is previously known, in angular measurement in tracking radars, to employ monopulse technique and so-called "conical scan" technique. These techniques are essentially employed against airborne targets and the technique is described in the radar literature, for example by Skolnik.

The technique presupposes that, theoretically, there is only a single target within the measurement sector in order that this target can be measured with a high degree of precision. However, such is not always the case and, moreover, countermeasures have been developed against this type of radar. For example, such countermeasures can generate ghost targets in the form of strips or repeating jamming transmission for losing the tracking radar.

Many radars for military purposes include functions for accurate measurement of radar targets. There are methods for measuring the position of a target in range and angle which can give better precision than that which corresponds to the pulse length of the radar or the antenna lobe of the radar, respectively. However, if there are several proximal targets, such measurement may become more difficult. If two targets are further away from one another in range than corresponds to the spatial extent of the radar pulse, a gap will occur between the pulse echo responses which makes possible a separation of the targets as two individual targets. If the targets are located more proximal to one another, the pulse echo responses will, however, merge and a single continuous echo response from both of the targets will be obtained. A radar receiver with a filter adapted to the pulse length of the radar gives radar pulses with rise and fall times of the same order of magnitude as the 3 dB length of the pulse. Consequently, it is usually said that the radar is capable of resolving targets which are located at twice the distance of the pulse length from one another. The term pulse length is then taken to signify the distance between the 3 dB points of the pulse. If the targets are located closer to one another, there is a region in the middle where signals from both of the targets interact with one another. Depending upon target size, target interaction and signal processing in the radar, targets can be separated even if they are closer to one another than two pulse lengths. On occasions, a separation of targets at a distance from one another down to one pulse length is possible. The corresponding reasoning applies to separation of targets at an angle in which the width of the antenna lobe plays a corresponding part to that of the pulse length in terms of distance.

A comparison may also be made with targets moving at different speeds. These can be separated using doppler filters in which the filter bandwidths play corresponding roles to that of pulse length and antenna lobe width.

To be able clearly to separate two targets, a good contrast is necessary, which corresponds to necessitating approximately one pulse length between the pulse responses of the targets (3 dB points), an antenna lobe between the 3 dB lobe widths of the target, and a doppler filter between those doppler filters where each respective target is to be found.

By waiving the contrast requirement and accepting a result which is not always one hundred per cent, targets which lie closer to one another can also be resolved in many cases.

In certain applications, it may be of considerable value to resolve two proximal targets. Examples of such application might be a coastal artillery battery which is to combat two vessels moving parallel to one another with a lateral distance between the vessels of 400 m. If the antenna lobe is, in this case, 1°, resolution "with contrast" implies that the targets must be separated by two degrees if the radar is to be able to provide firing data for two different targets.

On these conditions, the vessels can only be separated when they are at 13 km range from the radar. At 25 km range from the radar, the angle between the targets is only one lobe width, for which reason the targets may merge to form a single target whose centre point is somewhere between the actual targets. Based on this information, the battery would then attempt to put down their fire in the 400 m wide space between the vessels instead of on each respective vessel. If there were only one vessel, the radar would be able to give angular data of a precision which is a fraction of the width of the antenna lobe. If there are two or more vessels lying in close order, these may be read as one target, and firing data will thereby be wildly inaccurate.

## OBJECT OF THE INVENTION

One object of the present invention is to realize an improvement of the angular resolution in a radar, for example for coastal artillery.

One type of radar apparatus employed today in coastal artillery applications is the so-called jump-frequency radar. Since the jump frequency radar changes transmitting frequency from pulse to pulse, jamming transmitters which may be in action must disseminate their effect over a larger frequency range, in which event the jamming effect will be weaker within the current receiver band of the radar and thereby not be sufficient to put the radar out of action on jamming in the antenna side lobes of the radar. Vessel targets are also so large that no MIT is necessary in order that the targets be clearly manifest in the clutter environment. The requirement on high MIT performance which entails that anti-aircraft radar must transmit several pulses in a row on the same frequency is thus not necessary in this application, with the result that the fixed frequency radar is deemed unsuitable since it is easy to jam.

The jump frequency radar further enjoys the advantage of improving the performance of the radar against so-called glitter. Glitter occurs when radar targets such as vessels are composed of a very large number of radar-reflective parts, whose echo reflections interact with one another, with the result that the total reflection from the radar target changes greatly in size and has its centre point displaced over and alongside the target depending upon the aspect angle of the vessel or on what frequency the radar is transmitting. By forming a mean value from a plurality of measurements at different frequencies, equalization will be obtained of the variations. The radar target becomes reasonably large and its mean position coincides reasonably with that of the target. The error angle will be slight because of glitter. However, this effect is not favourable if the intention is to improve resolution. Mean value formation of the jump frequency measurement over two targets has an equalizing effect witch results in two proximal targets merging together and a radar centre point being given which lies between the two targets.

An example of another type of radar apparatus with suitable base function and in which the present invention may be applied is the radar which is described in Swedish patent application No. 89.02983-9.

In a coastal artillery application, the operators are well aware of the fixed radar image. They know what is land and islands, and their dispersed targets need not be analysed more closely. However, the operator wishes to be able to distinguish vessels in the proximity of islands and in narrow straits, and not least to be able to separate two or more vessels from each other. In a convoy or landing fleet, the operator wishes to be able to separate the different vessels on the radar so that efficient combatting of targets included may be put into effect.

Using radar, it is possible to obtain a resolution in both range and angle, i.e. two dimensions for a surface scanning radar for vessels. In addition it is possible, employing doppler function in the radar, to obtain a resolution in speed, i.e. two targets which lie in the same resolution element in range and in angle may be separated as two targets if they are moving at different speeds.

As far as coastal artillery radar is concerned, angular resolution of targets is today considered restrictive to the performance of the radar. Resolution in range is of the order of magnitude of 60 m (pulse length 0.2 μs), while resolution in angle is of the order of magnitude of 600 m (lobe width 1° and range 20 km). The distance resolution of 60 m is in parity with the vessel length, while the angular resolution of 600 m is considerably greater than the width of the vessel of approx. 10 m. Angular resolution can be improved by increasing the antenna width and thereby reducing the lobe width. For an X band radar, approx. 1° lobe width will be obtained from an antenna which is 2.5 m wide. However, much larger antennae become unmanageable and expensive when employed in mobile units. Alternative methods of increasing resolution then become interesting.

One method of improving angular resolution of targets is to compare their speed with the aid of doppler analysis. An X band radar with prf = 4 kHz, a lobe width of 1° and an antenna rotation of 20 rpm can give a doppler filter band width of 60 Hz, which corresponds to a speed difference of 1 m/s or roughly 2 knots. This can be sufficient to separate vessels moving in convoy with low speed differences. Coherent integration which is employed in doppler analysis can, however, also be of assistance in improving angular resolution at low speed differences.

Another method of improving angular resolution is to consider the distance resolution. By increasing distance resolutions, the possibility will be improved of resolving two vessels of equal size also in the angular direction. With a distance resolution of, for instance, 15 m, the probability increases that two vessels will not exactly cover the same range segments. Moreover, radar target fluctuations imply that, for the same range segment, the echo reflections behave very different in amplitude and phase from the two vessels. This is an effect which may be a problem for a radar which tends to even out fluctuations, but also a possibility of improving resolution in a radar, as will be apparent in the following discussion.

It is also previously known in this art to employ socalled monopulse technique in angular measurement. In order to achieve a high degree of accuracy in angular measurement, several measurement values of the target are required in a plurality of different directions for the antenna lobe. These measurement values reflect in part the shape of the antenna lobe and it is therefore possible to calculate the position of the target in the angular direction. If the target fluctuates from measurement value to measurement value, this does not, however, disturb the angular measurement. Monopulse measurement implies that, in two obliquely inclined antenna lobes, it is possible to obtain two measurement values simultaneously from the target and, on comparison between the measurement values, to obtain a measure of the angular position of the target, i.e. one radar pulse gives two measurement values, which is sufficient for angular determination. Since the two measurement values are obtained simultaneously, the fluctuations of the target will have no effect on the relationship between these two values. The monopulse technique can thereby also be employed in a jump frequency radar apparatus. However, no correlation will then be obtained between different measurement pairs, and the monopulse measurement per se does not automatically entail any improvement of the resolution of several targets.

It will probably be apparent to the skilled reader of the foregoing discussion that all of the known methods for improving angular resolution suffer from drawbacks. One object of the present invention is therefore to realise an improvement of angular resolution, in particular in a coastal artillery radar set, in a comparatively simple and efficient manner. That which, in this instance, substantially characterizes the present invention is apparent from the characterizing clause of appended Claim 1.

The present invention is thus based on the concept of employing more knowledge of those targets which it is intended to resolve. Hence, in the coastal artillery application, use is made of the phenomenon that the radar echo of vessels fluctuates, which is traditionally seen as a problem in angular measurements.

## SUMMARY OF THE INVENTION

One characterizing feature of the present invention is that the antenna lobe moves over the radar target in a known manner, for example as a scanning radar with an antenna which scans an angle sector. A target of slight angular extent in relation to the width of the antenna lobe (for example a punctiform radar echo) will then give successive measurement values when the antenna lobe passes over the target whose amplitudes directly reflect the shape of the antenna lobe. This is an established method of measuring the form of the antenna lobe.

Normal radar targets such as vessels and aircraft are by no means punctiform targets, but consist of a multiplicity of reflectors which interact with one another and form a total echo whose amplitude and phase vary greatly when the targets move in relation to the radar. The same powerful variation of the radar echo is obtained if the radar changes its frequency.

In one preferred embodiment of the present invention, the antenna scans so quickly over the radar target that this will not have time to fluctuate in the brief operative spell, but can be considered as a target of fixed amplitude. Experience has shown that this is a normal case for vessels which are scanned by a scanning radar with an antenna speed of one or two seconds. This normally also applies with a certain approximation to airborne targets. For example, the previously mentioned "conical scan" technique makes use of the phenomenon that airborne target show limited fluctuation during the measurement time. On the other hand, targets fluctuate considerably if the radar changes frequency. A frequency change of tens of MHz or hundreds of MHz implies that the various partial reflections of the radar targets are added up to a total echo with considerable variations in amplitude and phase. According to the present invention, the radar repeats several measurements of the radar target with the same frequency, during the time when the antenna scans over the target. These measurements then provide an image of how the shape of the antenna lobe influences radar reflections from the target.

In one preferred embodiment, the radar continuously measures during the time when the antenna scans over the target and changes frequency between two or more frequencies such that the same frequency recurs several times during the scan-over time of the antenna. In this way, measurement points will be obtained over the entire antenna lobe, and measurement series will be obtained for each of several frequencies.

The advantage of obtaining parallel, or quasi-parallel, measurement series for several frequencies will be apparent from that described in the foregoing - that the amplitudes of radar targets may vary considerably with the transmission frequency of the radar. If two radar targets, e.g. two vessels, are "equally big", measurements at different frequencies will result in one of the targets possibly being much bigger than the other at one frequency, and vice versa at another frequency. These target variations may be 10-fold to 100-fold and are normally several times, which entails that vessels lying in close order may be more readily separated by the radar, since it is easy to indicate the angular position to a large vessel echo since an adjacent small vessel echo gives slight interaction. By making parallel measurements on several frequencies, measurement series will be obtained when different targets become dominant and can therefore be measured with a high degree of reliability. The present invention is also characterized by the capability of measuring and distinguishing targets in the same size class. This is also facilitated by the phenomenon that many measurement values are obtained over the lobe for a radar which transmits continuously. A traditional pulsed radar will give poor performance since it does not provide as many measurement points over the lobe and, in addition, becomes extremely sensitive to jamming on transmission at the same frequency.

A measurement series over the target on one frequency during the antenna scan is the basis of analysis of the angular position of the target. If there is only one target within the relevant angle sector, it will be understood that accurate measurement with dense measurement points provides a good possibility of determining the position of the target in relation to the measured lobe centre of the antenna, for example a correlation between lobe shape and incoming measurement values provides a good angular determination. In this instance, it is rather the level of signal noise relationship $\frac{(S)}{N}$ and stability in the radar antenna etc. which sets the limits of accuracy. Glitter may be reduced by measuring in parallel at different frequencies and forming mean values of the results from the different frequencies, or quite simply by selecting the value with the largest amplitude. It is simple to demonstrate - and has also been experienced experimentally - that large echo values are obtained when considerable part reflectors accumulate substantially in one phase, the centre point of the radar echo being obtained between the part reflections. (If they are in counterphase, the total echo will be smaller and the angular indication can be displaced to one side or the other.)

Two closely adjacent vessels with a lateral distance apart which is less than the width of the antenna lobe will interact powerfully and, on antenna lobe scan over, a target diagram will be obtained which is no longer that representation of the antenna lobe which is obtained for a single, small target. If the distance between two vessel targets is of the order of magnitude of the same as the width of the antenna lobe, a wider target diagram than the antenna lobe will be obtained, and target diagrams will be obtained with different shapes for the different frequencies. If the vessels have radar echoes (as mean value) of the same size, the one target may, for one frequency, be ten times larger than the other - while in another frequency, target number 2 may be larger than the first. If one target is highly dominant, the shape of the target diagram will once again be like the shape of the antenna lobe, and the smaller target will be considered as a "disturbance", which is mostly marked on the one flank of the target diagram. In this antenna position, the large target no longer remains within the antenna lobe, for which reason the small target dominates the target diagram in this sector. It is thus possible to also measure the angular position of the small target if a sufficient number of measurement points are obtained in that sector where the small target is dominant. It is thus often possible to "resolve" two vessel targets which are closer to one another than one antenna lobe, and indicate the angular position for both targets. If there are several vessel targets close to one another, this method provides the possibility of defining angular position for the two outermost targets. In a target diagram, each respective flank provides information on the angular position of each respective outermost target. This angular position can be given with a high degree of accuracy as long as the next outermost targets are not too big and lie too close to one another so that they interact powerfully with the outermost targets. Two targets which lie at a distance of approx. $0.5 \cdot \theta_3$ (half of the 3 dB antenna lobe) from one another should, according to the present invention, be definable by their respective angular positions. This is not the same as saying that the resolution of the radar is $0.5 \cdot \theta_3$. The term resolution is generally taken to mean being capable of separating several targets individually and, as has been described above, $2 \cdot \theta_3$ is a standard measure of angular resolution. An apparatus according to the present invention is, however, capable of defining targets situated much closer together in a target structure with many targets.

**BRIEF DESCRIPTION OF THE ACCOMPANYING DRAWINGS**

The present invention will be described in greater detail hereinbelow in connection with one example and with particular reference to the accompanying Drawings, in which:

Fig. 1 describes the different stages up to a target analysis; and

Fig. 2 illustrates how the correlation principle can be employed to obtain Q factors for target positions.

## DESCRIPTION OF PREFERRED EMBODIMENT

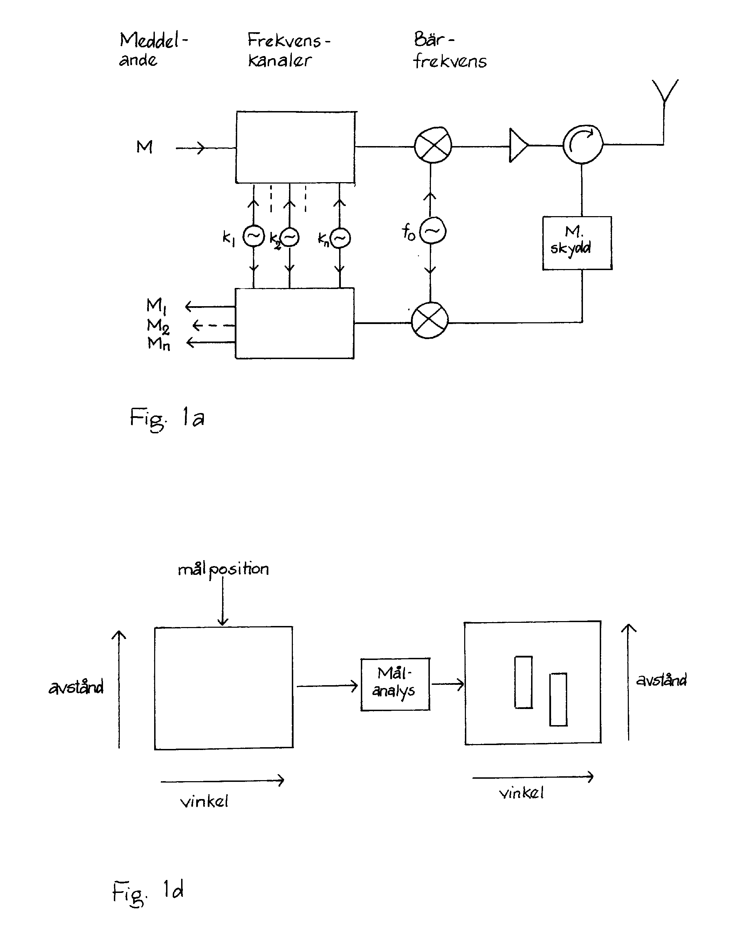

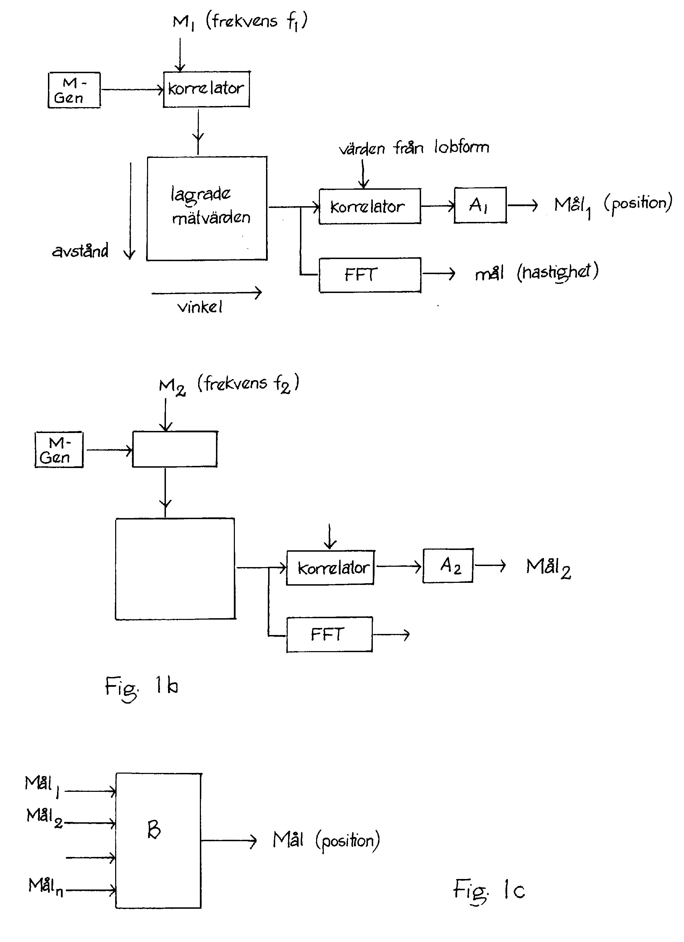

In Fig. 1a, a number of frequency channels $k_1$ to $k_n$ inclusive are modulated with different modulations from a message M. The frequency channels are mixed up to the carrier frequency $f_o$ and transmitted via amplifiers and circulators out through the antenna.

Radar echoes from targets are captured by the antenna and pass the circulator and receiver shield. Thereafter, the received signal is mixed down to each respective band frequency from which modulations $M_1$ to $M_n$ inclusive are obtained from each respective channel.

The radar transmitter may, for example, transmit on one frequency channel at a time and repeat the transmission on the same frequencies several times during the period the antenna scans over a radar target.

Fig. 1b shows how the modulation $M_1$ from the frequency channel $k_1$ is fed to a correlator which correlates with the transmitted modulation. The resulting measurement value for each distance increment and angular increment is stored in order to be outputted for the same distance for angular analysis.

The measurement values are fed successively into the correlator and are correlated with stored data obtained from the shape of the antenna lobe. The result is analysed in an analyser unit $A_1$, where possible standardization and positional determination are carried out, whereafter the result is printed out, "Target 1".

The modulation $M_2$ is fed in parallel from the frequency channel $k_2$ to a corresponding apparatus, and the result "Target 2" is obtained.

Fig. 1c shows how the results "Target 1" and "Target 2" from analysis of the different transmitter frequencies are fed to the analyser unit B. Here, the results for the same angle sector are compiled, and the result will be target width position. Possibly, Target also includes a Q factor for determination of position, which depends upon the quantity of target interaction.

Fig. 1d shows how target positions are stored together with their Q factor. With the aid of target analysis, targets are interlinked to target figures which, in their turn, can be compared with stored target figures for vessels etc.

The result may, for example, be displayed on a screen where operators may select targets, continued monitoring or combat. Tracking and successive evaluation of one or more targets is carried out by a "target tracker" with the aid of the analyses described above.

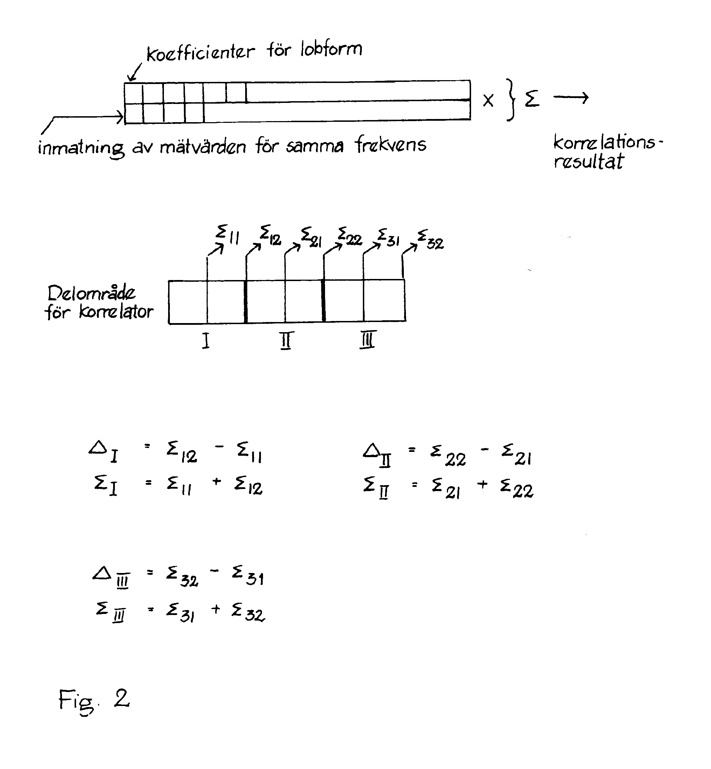

Fig. 2 shows uppermost, the correlator principle in which measurement values for the same radar frequency are successively inputted and correlated with stored information obtained from the lobe shape of the antenna. The figure shows (lowermost) how the correlator can be divided up into three subsectors which are each divided up into two parts. From each part, there is obtained a correlator result $\Sigma_1$ up to $\Sigma_{32}$ inclusive. Both difference and total for each respective subsector can be derived herefrom. These values may, according to the present invention, be employed for obtaining Q factors of target positions.

As is apparent from the above, the shape of the antenna lobe plays a major part in defining the angular position of a target. The flanks of the antenna lobe have valuable information on a target, since the measurement values of the target have a large and clearly defined derivative in these areas. The central portion of the antenna lobe is also valuable, since the measurement values of the target have their largest size here and may therefore conceivably dominate over other radar targets which are located lower down on the flanks of the antenna lobe when the radar antenna points straight at the target in question.

The information from the three different areas in the antenna lobe can be employed in alternative ways. Here, a number of examples will be presented to illustrate this function.

### Example 1

Values which describe the shape of the antenna lobe are stored in a correlator with the same angular steps as incoming measurement data. Suitably, data on the shape of the antenna lobe has been obtained from direct measurements of the relevant antenna.

Incoming measurement data is fed successively into the correlator and, when the pertinent target is centered, i.e. in maximum agreement with the lobe shape, the correlator gives a maximum value.

If a second target lies in the same range bin but with an angular displacement of 0.5 $\theta_3$, those measurement values which correspond to that lobe flank where target 2 has its centre include a relatively large contribution from target 2. On the correlation, the effect of target 2 is, however, reduced. Compare, for example, with the case that the antenna lobe consists of a cosine function between $-\pi$ and $\pi$. Assume further f $(\theta) = 1 + \cos \theta$. If target 2 is at point $\theta = \theta_o - \frac{\pi}{2}$ when target 1 is centered, target 2 gives correlation 0, when target 1 gives maximum correlation. Sine and cosine are not correlated. When target 2 in turn has reached the centre point of the correlator, target one is displaced $\theta = \frac{\pi}{2}$ and gives, in correlation, the contribution 0. In other words, target 1 and target 2 may be clearly separated in the correlator even though they lie close to one another in the angular direction.

Parallel measurement on several frequencies aids in the separation.

If, instead, correlation is effected with the derivate of the lobe shape or actually corresponding difference values for lobe shape and measurement values, further improved separation possibilities will be obtained (at high S/N). Combinations of difference and amplitude correlations over the antenna lobe can improve target separation. Parallel measurement of several frequencies provides several different target interactions, for which reason even greater reliability in target position can be obtained.

## Example 2

It is known from the filter technique that if a signal $f_1$ multiplied by a transfer function $f_2$ gives the result $f_3$, the signal can be retrieved from $f_3$ by multiplication with the inverse of $f_2$. In simplified terms there will be obtained, transferred to antenna measurement:

Assume that a target $A_1 \cdot f_1 (\theta_o)$ is to be found in angle position $\theta_o$. The antenna lobe has the function $h (\theta)$, where $h (\theta - \theta_o)$ multiplied by the target gives the result $A_2 \cdot f_2 (\theta)$, which corresponds to the measurement values the radar obtains when the antenna lobe scans over the target.

The target $A_1 f_1 (\theta_o)$ can then be obtained from $\dfrac{A_2 \cdot f_2 (\theta)}{h (\theta - \theta_o)}$, where $\theta$ is stepped by $\delta\theta$, which is the angular distance between the measurement values. When $\theta_o$ is unknown, a correlator is practical for obtaining the target and its position $\theta_o$. In the correlator, the function $h (\theta)$ is stored, and the measurement values are entered in sequence. For each angular step, the stored information is multiplied by the entered values and is sum totalled. When agreement is reached, i.e. the position of the target corresponds to the centre value of the correlator, correlation will be at maximum and the position of the target defined by this maximum. For wide antenna lobes, the maximum may be experienced as flat and adjacent targets may interfere with the measurement.

In order to increase the possibility of separating targets, $h (\theta)$ may be changed from an exact replica of the antenna lobe. For example, $h (\theta)$ may be rescaled and become narrower $h (\theta) - h_1 (k\theta)$. This entails that the side lobe level increases and k (scale factor) must be selected as a compromise between lobe width and side lobes. It is also possible to regard $h_1 (\theta)$ as a function which, in the signal processing unit, can change the lobe shape of the receiver antenna. For example, $h_1 (\theta)$ may be formulated such that $h_1 (\theta)$ includes the closest side lobes on either side within the original lobe shape of $h (\theta)$. In this way, the capability of separating closely adjacent targets of equal size is increased. If the antenna with lobe shape $h (\theta)$ gives low side lobes, $h (\theta)$ can be employed in which the low side lobes are of interest and $h_1 (\theta)$ can be employed in those particular cases where separation of closely adjacent targets is given priority.

No distinction is drawn in the Claims between the functions $h_1 (\theta)$ and $h (\theta)$, it being understood from the foregoing discussion that the lobe shape function can be modified in order to achieve the desired performance.

## Example 3

In example 1, it was demonstrated by examples that two targets with a separation of approx. $0.5 - \theta_3$ can be almost uncorrelated. This implies a possibility of performing, in addition to ordinary correlations, extra correlation on measurement values displaced by the decorrelation angle from the centre point of ordinary correlators. This corresponds approximately to the lobe flanks on ordinary antenna lobes. The target which lies in the centre of an ordinary correlator thus gives little contribution to the two other correlators, for which reason those values which are obtained in these correlators substantially consist of interaction from targets which lie in other angular positions. Those values which are obtained in the extra correlators can therefore be retransformed, and, via the regular correlator, be subtracted from the correlator information the regular correlator. The target values in the extra correlators which are uncorrelated with the target position in the regular correlator give a slight contribution. But targets which assume an intermediate position give contributions both in the regular correlator and in one of the extra correlators, and the interaction of these targets in the regular correlator can be reduced by transformation of the values obtained in the extra correlator so as to compensate for values in the regular correlator.

## Example 4

In many applications, it is of value to obtain, in addition to target position, a value of how reliable such an indication is. Compare a radar which forms the mean value of two closely adjacent targets and thus indicates one target position between the targets. This is unsuitable. Targets may lie close to one another and interact so that it is difficult to define the position of the targets with certainty. It is then usually best to indicate that the target position is uncertain, so that the fire control system may select a more reliably indicated target to combat - while awaiting the radar, on the next antenna scan, to provide a more reliable target position. It will be illustrated below how target positions may be obtained together with a factor which indicates reliability in positions.

The antenna lobe is divided into three sectors, each $0.5\ \theta_3$ in width. The centre section thus extends $0.25\ \theta_3$ in either direction. Thereafter left and right flank portions follow one another symmetrically $0.5\,\theta_3$. The measurement distances together amount to $0.5\,\theta_3$. The 3 dB points of the antenna lobe define the lobe width $\theta_3$, which implies that, if the same antenna is employed for both transmission and reception, a signal received in the 3 dB point will be 6 dB lower than a signal from the lobe centre of the antenna. (This implies that a two-wave antenna has a narrower 3 dB lobe width than a corresponding single-wave antenna and thus also potential for better angular resolution.)

Each one of the three above-mentioned antenna sectors are divided up into two subsectors and subsequent signal processing is effected in the different sectors.

**Centre sector**

The measurement values are totalled in each subsector separately. Thereafter, the different ($\delta_M$) and total ($\Sigma_M$) are formed. For $\Sigma_M$ over a threshold determined by requisite S/N (signal/noise ratio) the quotient will be formed

$$P_M = \frac{\Sigma_M \cdot k_1}{\delta_n}$$

Where $k_1$ is a standardization constant such that $P_M = 0.9$ for a target which is displaced $0.1 \cdot \theta_3$ from lobe centre. $P_M$ is maximized to 1.

**Flank sector, left**

In a manner corresponding to that above, there is formed:

$$P_{FV} = \frac{\delta_{FV} \cdot k_2}{\Sigma_{FV}}$$

where $k_2$ is a standardization constant such that $P_{FV} = 1.0$ for a target in the centre.

**Flank sector, right**

In a manner corresponding to that above, there is formed:

$$P_{FH} = \frac{\delta_{FH} \cdot k_2}{\Sigma_{FH}}$$

The denominator in $P_{FV}$ and $P_{FH}$ can alternatively be changed to $\Sigma_M$.

The signal processing may be illustrated most simply as follows.

The measurement values from the receiver of the radar are sorted with each frequency independently, and are stored in a series corresponding to the angle width $1.5 \cdot \theta_3$. When a new measurement value is added, the oldest is rejected. If a punctiform target has just been passed by the antenna lobe so that the last measurement value is $0.75 \cdot \theta_3$ from lobe centre, it thus applies that the accumulated, stored series of measurement values covers positions of the target from the one flank sector, across the central sector, to the other flank sector, and the centremost measurement value then corresponds to the position where the target is in the centre of the lobe.

In this position, ideally the difference is $\delta_M = 0$ and $\Sigma_M = $ max. $P_M$ will be a large number limited by the fact that $\delta_M \neq 0$ in reality (and is limited to the value 1 on calculations according to this example). If another target is at the distance $\theta_a \leqq 0.5\theta_3$ from the target centered in the middle, target number 2 has its largest echo signals displaced to the one flank sector of the measurement series. In the central sector of the measurement series, target number 2 has those echo signals which correspond to the flank of the antenna lobe.

Target number 2 interacts with target number 1 in the different sectors as follows.

Centre sector: if target number 2 is small and also has its centre value reduced 6 dB (flank value), target number 2 influences the value $\Sigma_M$ relatively slightly as compared with how target number 2 influences the value $\delta_M$. Target number 2 presents a powerful derivate in the centre sector. This implies that PM will be smaller and that $P_M$ will have its maximum value with the measurement series somewhat displaced from the centre value of target number 1.

**Flank sector, left**

If target number 2 has its signal maximum in the left flank sector of the measurement series, we will then have target number 2 centered in this sector and a relatively slight contribution to $\delta_{FV}$. If target 2 is as large as target 1, $\Sigma_{FV}$ will be dominated by target 2 and $P_{FV}$ is greatly reduced. If instead $P_{FV}$ normed with $\Sigma_M$, $P_{FV}$ will be greater, and if $P_M$ is of reasonable magnitude, this may be better information on target interference.

**Flank sector, right**

Target number 2 has very low signal effect in the right flank sector of the measurement series (centre lies in the left flank) and will thus have little effect on $P_{FH}$.

The result of the analysis of targets in the three different measurement sectors gives, in this example:

clear indication that there is a target in the relevant direction from the values in "flank sector right". ($P_{FH}$ > threshold value).

Information from the centre sector that target interaction occurs. The value of $P_M$ indicates that there is a target within a corresponding angular sector. If target number 2 is small compared with target number 1, $P_M$ will be large and the angular sector will be narrow.

Information from "flank sector left "gives information corresponding to that of the centre sector.

The values $P_{FV}$, $P_{FH}$ and $P_M$ may be utilized in several ways. A single value of $P_{FV}$, $P_{FH}$ or $P_M$ which is higher than a threshold value $T_1$ is a correspondingly reliable indication of a target in the relevant position.

A product $P_{FV} \cdot P_M$ or $P_{FH} \cdot P_M$ (with the relevant subsidiary condition that $P_M$ is larger than $T_2$), which is larger than a threshold $T_3$ constitutes a correspondingly reliable target position. The threshold $T_3$ may be selected to be lower than $T_1$ and a corresponding threshold for the product $P_{FV} \cdot P_{FH} \cdot P_M$ may be selected to be lower than $T_3$ for a certain reliability in target position.

## Example 5

On analysis of received measurement data, a simplified analysis may be conducted based solely on the amplitude information of the measurement values. However, the phase of the measurement values also includes information on the radar targets. For doppler filtering of targets, phase information and several measurement values on the same frequency are required. Targets which move at constant speed change the phase of the radar reflection at constant speed, which gives rise to a doppler shift of the frequency of the received signal in relation to the transmitted radar frequency.

In order that the correlators function for targets whose phase varies manifestly (more than 90° or 180°) during the antenna scan of the target, compensation is necessary of the phase values of the measurement values, or compensation of corresponding values obtained from the lobe shape.

Normally, the measurement values are divided up in an I and an O channel, and the correlators are fed with associated coefficients, corresponding to a given doppler band. Either a number of fixed correlators can be employed or, for example, an FFT (Fast Fourier Transform) can be effected for filtering targets to each respective doppler bin. When the doppler of a pertinent target has been determined, correlators can be given corresponding coefficients and thereby separate targets via correlation operation. Fixed correlators can be adapted to a number of typical or interesting speed sectors. For example, a low speed sector of about zero speed may be interesting in order to detect land targets or slowly moving targets. Another interesting sector is wind speed, since strips, small water droplets from water bursts, etc., can be caught up in this doppler bin. Some correlators can be allocated to interesting vessel speeds.

On division of a correlator into several subsectors and when phase information is included in the values from each respective subsector, it is necessary, on operation of the measurement values from different subsectors, that the phase values be dependent upon a common point of departure. This may, for example, be the centre point of the correlator or the interface between two affected subsectors.

Knowledge of the phase of interacting targets may be employed for better target indication. However, of greatest value is that doppler filtering of targets of different speeds which can be realized with the aid of the phase information of the measurement values.

One method of employing phase information concerning the targets without explicit compensation for the doppler phase of the targets is obtained when the symmetry in the lobe shape is utilized. Pairwise multiplication of symmetric measurement values on either side of the correlator centre gives products without doppler phase and with target phase related to target values in the centre point.

As a result of correlation with lobe shape values, interacting targets which, on the one hand, only interact during a part of the correlator and, on the other hand, have an uncorrelated phase can be suppressed more powerfully than if only target amplitude had been employed.

The above-described method can also be employed in difference correlation. Here, symmetric points have, however, different signs since the derivates of the lobe shape are an odd function.

## Target depiction and target figures

The range and angular information constitute basic information for a reliable resolution of target and determination of position. According to the invention, a target depiction (or target map) may be obtained in which the surface is defined by angle and range segments and a third dimension (altitude includes information on target probability in the relevant position).

On presentation, different colour shades, for example, may be employed to mark increasing target probability. It is also possible to identify, from the target depiction, associated resolution segments which may form target figures. Particularly interesting target figures such as vessels, for example, may be scanned and analysed. Such a target depiction may be employed for selecting, for example, particularly important targets for combatting.

On combatting vessels using coastal artillery, it is of interest to identify the fall of shot so as to correct firing in order to place the hit pattern over the target. The fall of shot may give rise to considerable water eruption or splash which may be difficult to observe using a traditional radar set. Once again it is the angular resolution which is the problem. If the radar suffers from poor angular resolution, a splash may lie well to the side of the vessel target without it being possible to distinguish the splash from the target itself.

According to the present invention, one of the previously mentioned methods affords an improved angular resolution. Moreover, the water eruption or splash normally has a different doppler speed than the vessel target itself. On splash, the water has a spread of different radial speeds about the zero speed - water sprays at great vertical speed. The finest water droplets may float for some time in the air before falling down (several seconds) and will then have a radial velocity component which corresponds to the wind speed.

Doppler speed may be a crucial basis for target sorting and target depiction according to the above description may be effected for a plurality of doppler segments.

The lobe shape of the antenna plays a major role in the ability of the radar to perform angular resolution of targets. Different methods have been described above for correlating measurement data with information obtained from the lobe form. The lobe shape of the antenna may be obtained by careful measurements, possibly on several frequencies, and data may be stored in the radar. Modifications in signal processing of the lobe shape function may also be tested against actual targets, and suitable functions for artificially making the lobe narrower, and the angular resolution may better be evaluated and stored in the radar.

The lobe shape may also be described and approximated using key terms from a Fourier series. Antenna lobes are normally of a form which is associated to some power of a cosine function, e.g. $\cos^2$ or $\cos^4$. By defining the lobe shape in Fourier terms, measurement data may be selected for analysis in the so-called frequency plane instead of the in the time plan. This method is well known within filter technology.

There is yet a further method of angular resolution of targets given an a priori knowledge of the number of targets in a certain direction or, for example, when it is desired to establish whether a certain radar echo may conceivably consist of two targets. An equation system may be defined in which the number of targets is included, and the different measurement values give solutions which may successively be better adapted. Parallel measurement on several frequencies also gives new uncorrelated measurement values here, which increases the possibility of indicating, with a high degree of reliability, target position for the different targets even when they are very close together. This type of analysis may be carried out on stored measurement data, for which reason a considerable amount of time is available for calculation as compared with such operations which must be carried out at the same pace as the radar display.

## Claims

1. An apparatus for resolution and measurement of radar targets in the angular direction in a radar of the type which transmits repeatingly on at least two frequencies while the antenna scans over the relevant radar target, preferably a radar which transmits continuously alternatingly between a plurality of frequencies which are repeated while the antenna scans over relevant radar targets **characterized in that** the shape of the antenna lobe constitutes basic information from which derived values are compiled with corresponding values from the obtained measurement values when the antenna of the radar scans over the relevant angular sector; **and that** the operations to the compiled measurement values are effected with values for each frequency independently; **and that** when the result has been obtained for the employed frequencies, a compilation of the thus obtained results for the different frequencies will give, as a result, an azimuth angle target positioning.

2. The apparatus as claimed in Claim 1, **characterized in that** incoming measurement values are grouped in three subsectors in which the centre sector corresponds to the centre sector of the antenna lobe and the two side sectors correspond to the flanks of the antenna lobe, the measurement values in the centre sector being individually totalled and each respective side sector being divided into two subsectors whose measurement value sum totals are subtracted and normed in respect of the sum total of the centre sector; **and that** the norm value of each respective side sector is thereafter divided by the corresponding normed value obtained from the shape of the antenna lobe and the results $P_1$ and $P_2$ are obtained for each respective side sector; **and that** the centre sector is also divided into two subunits whose total value is divided by the difference value and is normed to a value $P_3$, in which norming for example may consist of multiplication by a factor obtained from the condition that a target displaced by one angular step from the centre gives a normalised value on multiplication by the factor of the quotient obtained in this position between total and difference in the centre section; **and that** the maximum value of $P_3$ is limited, for example to 1, the values of $P_1$, $P_2$ and $P_3$ being measures of how the measurement values from one individual target are centered in relation to the grouping in the three subsectors, or the quantity of interference from other proximal targets, respectively.

3. The apparatus as claimed in Claim 2, **characterized in that** criteria for target localization are obtained from the conditions of $P_1$, $P_2$ and $P_3$ and their products, for example if $P_1$ has a maximum exceeding the threshold value of $T_{11}$ and $P_3$ is, at the same time, above the threshold value of $T_{31}$ ,

this is an indication of the angular position of a target with a probability determined by current $P_1$ and $P_3$ values, the corresponding applying for a combination of $P_2$ and $P_3$, the products $P_1 \cdot P_3$ and $P_2 \cdot P_3$ as well as $P_1 \cdot P_2 \cdot P_3$ being also usable for target positioning where the products have a maximum value above each respected threshold value, no threshold value being then exceeded, and this implying that no target lies centered in a corresponding position; **and/or that** the interaction from proximal targets is too powerful for determination of target position with a probability corresponding to the threshold values.

4. The apparatus as claimed in Claim 1, **characterized in that** a correlator is employed for correlating values derived from the shape of the antenna lobe and corresponding values from those measurement values which are obtained when the antenna scans over a corresponding angle sector.

5. The apparatus as claimed in Claim 4, **characterized in that** the correlator is fed with the amplitude values obtained from the shape of the antenna lobe, and with the maximum value normed to a suitable value, for example 1, and, thereafter, the correlator is successively fed with measured values for each step in the angular position which the antenna assumes for the successive measurements on the same radar frequency and the angle step between the measurement values is as large as the angle step between the entered amplitude values from the lobe shape, the correlator performing multiplication of associated values and addition of the products and a target giving maximum amplitude when its position corresponds to the centre position of the correlator.

6. The apparatus as claimed in Claim 5, **characterized in that** the correlator is fed with derivate values or difference values from the lobe shape instead of amplitude values; **and that** the difference values between successive measurement values are entered, for correlation with the difference value of the lobe shape instead of the measurement values direct, the result of this correlation being alternatively combinable with the correlation result for increased reliability of target position.

7. The apparatus as claimed in Claim 6, **characterized in that** correlation is instead carried out with the difference values obtained from values which are separated by several angular steps; **and that** any possible norming is performed with corresponding total values before or after the correlation.

8. The apparatus as claimed in Claim 4, **characterized in that** the correlator is divided into three subsectors in which the centre sector covers the centre sector of the antenna lobe and the two other side sectors each correspond to their flank on the lobe, and the correlator is fed with values obtained from the shape of the antenna lobe, such that the centre sector is fed with amplitude values corresponding to the amplitude function of the centre sector of the antenna lobe, with the maximum value normed to a suitable value, e.g. 1, and the side sectors are fed with corresponding derivates or difference values from the lobe shape, and thereafter successive measurement values are fed into the centre sector of the correlator and associated differences between the measurement values are fed into each respective side sector so that the entered values in the correlator lie in sequence corresponding to the values obtained from the lobe shape and with the same angular step displacement as the values obtained from the lobe form.

9. The apparatus as claimed in Claims 4, 5, 6 or 8, **characterized in that**, when correlator maximum is obtained, this value is normed with a corresponding value from the centre sector of the correlator and division is effected with auto correlation value from the values obtained from the lobe shape, this value P constituting a dimension of interference from other targets and thereby also probability that target indication corresponds to the angular position of a real target.

10. The apparatus as claimed in Claims 4, 5, 6, or 8, **characterized in that** correlation is also carried out with two other lobe max. displaced angle 0, on either side of the first-mentioned lobe max. and these new correlation values constitute a dimension of interference from other targets on either side of the pertinent target and is zero, suitably selected for low correlation between two targets separated by the angle 0, and these extra correlations may also be employed for reducing target interference in the first correlator.

11. The apparatus as claimed in any one of Claims 1-10, **characterized in that** only the amplitudes of the measurement values are employed, i.e. the phase values are not employed.

12. The apparatus as claimed in any one of Claims 1-10, **characterized in that** both the phase and amplitude of the measurement values are employed, and correction is carried out for doppler shift of a target by the phase between the measurement values either by correcting the measurement values or correcting the values obtained from the lobe shape.

13. The apparatus as claimed in Claim 12, **characterized in that** the doppler correction is effected in parallel at phase angles of different sizes corresponding to different doppler segments, targets at different speeds being filtered out to each respective doppler segment and these doppler segments being applied from the outset, or a doppler filtering of the measurement values in a first stage may provide information on that or those doppler segments which are of interest for selection for correction of doppler phase in connection with any of the angular resolution methods as claimed in Claims 1-11.

14. The apparatus as claimed in Claims 12 or 13, **characterized in that** angular resolution of targets takes place in two steps in which one or more targets are identified by angular position, amplitude and phase in accordance with any of the above methods, and this target information is thereafter subtracted with one of the above angle resolution methods, any possible remaining targets being detected.

15. The apparatus as claimed in any one of Claims 1, 4, 5 or 6, **characterized in that** the measurement values are, after possible correlation in accordance with the foregoing, correlated with one another, symmetrically in respect of the centre point of the measurement value sequence, such that the first measurement value to the left of the centre point is multiplied by the first measurement value to the right of the centre point, and so on, whereafter the values are sum totalled, the doppler shift of the target disappearing as a result of the symmetry, and the correlation being effected with the phase based on the phase of the target in the centre point and on different correlation sign replacement takes place since the derivate of the lobe shape is an odd function about the centre point of the lobe and a norming of the correlation result may be performed with corresponding methods from Claims 8 or 9.

16. The apparatus as claimed in any one of Claims 1-15, **characterized in that** corresponding processes take place on more than one radar frequency, the results for the different frequencies being compiled in such a manner that target position which has been obtained with high probability, above a threshold value, is indicated as target, and if several targets are indicated within half of the lobe width $\theta_3$ (=3 dB lobe width) with lower probability for target, but above a second threshold value, those targets are indicated which have the largest product of amplitude and probability value, adjacent target indications of the order of magnitude of one angular step in separation being primarily indicated as a target with position according to target with maximum amplitude and for target presentation the non-normed correlation values for each frequency may also be added to optional requirements of probability threshold.

17. The apparatus as claimed in any one of Claims 1, 4, 5, 6, 7, 8, 10, 11, 12, 13, 14, 15 or 16, **characterized in that** the results from the correlator or from selected subsectors of the correlator are normed in respect of the measurement values from the centre sector of the correlator or other selected measurement values, and are normed with corresponding values obtained from the lobe shape such that a punctiform radar target gives a suitable normed value, e.g. the value of 1, and thereby the normed value, on interaction with a plurality of targets constitutes a dimension of target interaction and probability of target in the ielevant target position.

18. The apparatus as claimed in Claims 1-16, **characterized in that** range resolution is employed for improved angular resolution such that a target depiction is obtained in which the surface is defined by angular and range segments and a third dimension (altitude) contains information on target probability.

19. The apparatus as claimed in Claim 18, **characterized in that** the target depiction constitutes a basis for determination of target figures in which particularly interesting target figures such as, for example, vessels, are scanned and analysed, and also radar echo from bursts may have characteristic target figures where further parameters such as duration in time and doppler profile may constitute target identification criteria.

20. The apparatus as claimed in Claims 1-19, **characterized in that** doppler information constitutes yet a further dimension for target sorting; **and that**, for each doppler segment, a separate target image according to Claim 16 may be obtained.

21. The apparatus as claimed in Claims 1-18, **characterized in that** the lobe shape may be approximated by a cosine function or a Fourier series of essential terms, which may be multiplied by incoming measurement values as sample function.

22. The apparatus as claimed in Claim 1, **characterized in that** targets are desired to be angularly resolved on condition that a given number of targets within a given area, e.g. two targets with slight angular separation, a best solution of the position of the targets being operationally obtained by utilizing the knowledge of the shape of the lobe and obtained measurement values, considerable weight being ideally placed on those measurement values which are obtained in which the derivate is greatest, on the flanks of the lobe; and that the solution is thereby obtained suitably by iterative solution of included equations and it being also here of value to include measurement values of different frequencies such that new interaction patterns may be obtained for analysis.

Meddel-
ande  Frekvens-
kanaler  Bär-
frekvens

Fig. 1a

Fig. 1d

$M_1$ (frekvens $f_1$)

M-Gen → korrelator

lagrade mätvärden

avstånd

vinkel

värden från lobform

korrelator → $A_1$ → $Mål_1$ (position)

FFT → mål (hastighet)

$M_2$ (frekvens $f_2$)

M-Gen →

korrelator → $A_2$ → $Mål_2$

FFT →

Fig. 1b

$Mål_1$ →
$Mål_2$ →

B

→ Mål (position)

$Mål_n$ →

Fig. 1c

koefficienter för lobform

$x \Big\} \Sigma \longrightarrow$

inmatning av mätvärden för samma frekvens

korrelations-
resultat

$\Sigma_{11}$ $\Sigma_{12}$ $\Sigma_{21}$ $\Sigma_{22}$ $\Sigma_{31}$ $\Sigma_{32}$

Delområde
för korrelator

I     II     III

$$\triangle_I = \Sigma_{12} - \Sigma_{11} \qquad\qquad \triangle_{II} = \Sigma_{22} - \Sigma_{21}$$

$$\Sigma_I = \Sigma_{11} + \Sigma_{12} \qquad\qquad \Sigma_{II} = \Sigma_{21} + \Sigma_{22}$$

$$\triangle_{III} = \Sigma_{32} - \Sigma_{31}$$

$$\Sigma_{III} = \Sigma_{31} + \Sigma_{32}$$

Fig. 2